# EUROPEAN PATENT SPECIFICATION

(11) **EP 0 315 131 B1**
(45) Date of publication and mention of the grant of the patent: **22.09.1993**
(21) Application number: 88118222.4
(22) Date of filing: 02.11.1988
(51) Int. Cl.: G02B 6/26, G02B 6/32

(54) **Device for coupling single-mode optical fibres**
Anordnung zur Kopplung von Monomode-Fasern
Arrangement pour l'accouplement de fibres-optiques monomodes

(30) Priority: 05.11.1987 IT 6794387
(43) Date of publication of application: 10.05.1989
(73) Proprietor: CSELT Centro Studi e Laboratori Telecomunicazioni S.p.A., I-10148 Turin (IT)
(72) Inventor: Caviglia, Francesco, Torino (IT); Ricaldone, Piergiorgio, Torino (IT)
(74) Representative: Riederer Freiherr von Paar zu Schönau, Anton

(56) References cited:
- EP-A- 0 057 164
- EP-A- 0 089 758
- PATENT ABSTRACTS OF JAPAN vol. 6, no. 46 (P-107)(924), 24 March 1982 & JP-A-56 161506

## Description

The present invention concerns telecommunications systems using light radiation transmitted by optical fibres and more particularly a device for coupling single-mode optical fibres through a collimated beam.

This type of coupling is of particular interest in the applications requiring devices interposed between the fibre ends for processing the optical signal: modulators, beam splitters, Bragg cells, etc.

As known, under these conditions the transmission of the light radiation from a single-mode optical fibre to another presents a number of difficulties if very low coupling losses are desired. That is due to the fact that accepted tolerances in displacement errors are of the order of microns and those allowed in axial misalignement errors are of the order of one degree. Hence the difficulty encountered both in carrying out the correct fibre positioning and in maintaining the position found is evident.

The solutions adopted require the use of coupling devices with high-precision guides, in order to obtain the alignment between lenses and fibres without further adjustments.

According to other solutions, fibre ends to be coupled are positioned with high precision by micromanipulators and hence are kept in the position found with adhesives or solders. Said methods still present a number of difficulties in their application owing to adhesive shrinkage during the drying phase, which causes again axial displacement and misalignment of the opposite fibres.

The coupling problem between a collimated beam source and a single-mode fibre has already been solved by Newport Corporation, which has presented in its 1985 catalog a device referred to as "High-Precision Steering Lens Single Mode Fiber Coupler". This device basically consists of a biconcave and a biconvex lens, which are traversed by the collimated beam outgoing from the source. The biconcave lens is used to obtain the beam deflection, while the biconvex lens is used to focus the beam on the fibre-end face. The biconcave lens can be translated in a plane perpendicular to the beam, obtaining a corresponding translation of the image focused on the fibre. The ratio between these translations is equal to the ratio between the lens focal distances, which is why small image displacements can be obtained through much greater biconcave-lens displacements.

A device of this type alone is not apt to implement the coupling between two fibres, in fact if these are not yet well positioned the beam focused on a fibre does not easily remain within its acceptance angle, even if the core image of the optical fibre is correctly positioned on the other fibre core.

This problem could be solved by placing one device of the mentioned type per each fibre. Yet the further degree of freedom obtained would be detrimental both to the simplicity of device implementation and to the ease of coupling adjustment.

Said disadvantages are overcome by the device for coupling single-mode optical fibres provided by the present invention, which allows the coupling through a collimated beam keeping the optical losses very low, is easy to implement and simple to use.

The present invention provides a device for coupling single mode optical fibres through a collimated beam, wherein the light radiation outgoing from a first optical fibre is collimated by a first lens, and the collimated beam is focused by a second lens on the end face of a second fibre, wherein between said first and second lenses there are inserted optical components including a lens which can be translated in a plane perpendicular to the device optical axis which is the straight line traversing the centres of said first and second collimating lenses. According to a first embodiment, the device is characterised in that the lens is translatable in two orthogonal directions in said plane, and said optical components further comprise a glass plate with plane and parallel surfaces which is rotatable around two perpendicular axes in said plane; and according to a second embodiment, the lens is translatable in a plane and rotatable around two orthogonal directions in said plane.

Arranging a parallel flat glass plate in a collimated beam between optical fibre ends is known per se from Patent Abstracts of Japan, vol. 6, no. 46 (P-107)(924), 24 March 1982; & JP-A-56 161506 (SOKYO SHIBAURA DENKI K.K.), in an attenuator for varying the attenuation factor by the angle of inclination of the glass plate, the beam being shifted in parallel by the glass plate to be put into the receiving optical fibre via a lens.

The foregoing and other characteristics of the present invention will be made more evident by the following description of a preferred embodiment thereof, given by way of non-limiting example, and by the annexed drawing which is a schematic representation of the optical system.

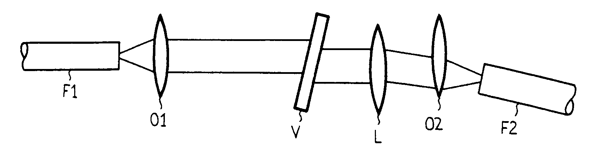

In the drawing references F1 and F2 denote two single-mode fibre ends to be coupled and O1, O2 denote two lenses of focal length f, apt to render the beams outgoing from the fibres collimated.

V denotes a glass plate with plane and parallel surfaces, thickness D and refractive index n, and L denotes a lens with focal length f', which is considerably higher than focal length f of O1 and O2.

Glass plate V can be rotated around two perpendicular axes lying on a plane perpendicular to the device optical-axis, considering as reference optical-axis the straight line traver-sing the centres of lenses O1 and O2. By a slight rotation of the glass plate, a translation of the collimated beam coming from either fibre is caused, obtaining a variation of the beam arrival angle on the end face of the other fibre. This variation is equal, with a good approximation, to the product of the glass plate rotation angle and the quantity (D/f)(1-1/n).

In turn lens L can be translated in a plane perpendicular to the optical axis according to two orthogonal directions, thus causing an inclination of the collimated beam arriving from a fibre, and hence the translation of the arrival zone of the beam on the end face of the other fibre. The latter translation is equal, with a good approximation, to the product between the translation of L and the quantity f/f'.

The glass plate rotation can have as a secondary effect a slight translation of the arrival zone on the fibre end face, as well as the translation of lens L can generate a slight variation in the arrival angle. However the primary effects are prevailing, that is why with the combined action of lens and glass plate and with few successive adjustments the optimal coupling condition is quickly reached.

The glass plate thickness D can be conveniently chosen according to the accepted tolerances in fibre end positioning. If the thickness is insufficient, the glass plate inclination must be large, hence strong reflection losses are generated. Vice versa, if the thickness is excessive, small glass plate inclinations cause considerable beam translations, rendering the operation critical. Analogous considerations apply to the focal length f' of L: if it is too small critical positioning of L results; if it is too high considerable L displacements are required and hence the device becomes more cumbersome. Approximately, f' should be between 10 and 100 times the focal length f of O1 and O2.

In a practical embodiment of the device a glass plate with D=4 mm, lenses O1 and O2 with f=3 mm and a lens L with f'=200 mm have been advantageously used.

The glass plate inclination is rendered possible by a suitable supporting fork, which holds the plate glass by means of two horizontal pins and can rotate around a vertical axis. As an alternative, the glass plate can be mounted into a ring with spherical external surface, fastened by a support with a suitable number of bearings.

Lens L can be correctly positioned by fastening it to a ring which can be translated by conventional means, such as slides or screws.

To make device fabrication cheaper the glass plate and lens supports can be made of a material easy to bend or twist to obtain the optimal coupling condition. The device stability can be increased afterwards by fitting the supports with suitable adhesives. As an alternative, an adhesive or another suitable medium can be used to fasten lens and glass plate temporarily supported and positioned by mobile external supports, belonging to an assembly bench.

The right sequence of the operations necessary to optimize the coupling is as follows:
a - positioning of fibre ends by micromanipulators;
b - fibre fastening by suitable adhesives;
c - lens and glass plate positioning in order to compensate for undesired displacements occurred during operation b;
d - non critical fastening of lens and glass plate.

Possible optical elements apt to collect part of the collimated beam or to modulate its intensity are placed between O1 and V.

It is clear that what described has been given only by way of non limiting example. Variations and modifications are possible without going out of the scope of the present invention.

More particularly, the glass plate can be omitted and its function carried out by the same lens L, made with a thickness similar to that of the plate glass, which lens ought to be inclined and translated to obtain a correct coupling between the fibres. In this way a simpler device results.

## Claims

1. A device for coupling single-mode optical fibres through a collimated beam, wherein the light radiation outgoing from a first optical fibre (F1) is collimated by a first lens (O1), and the collimated beam is focused by a second lens (O2) on the end face of a second fibre (F2), wherein between said first and second lenses (O1, O2) there are inserted optical components including a lens (L) which can be translated in a plane perpendicular to the device optical axis which is the straight line traversing the centres of said first and second collimating lenses (O1, O2), characterised in that:
the lens (L) is translatable in two orthogonal directions in said plane; and
said optical components further comprise a glass plate (V) with plane and parallel surfaces which is rotatable around two perpendicular axes in said plane.

2. A device for coupling single-mode optical fibres through a collimated beam, wherein the light radiation outgoing from a first optical fibre (F1) is collimated by a first lens (O1), and the collimated beam is focused by a second lens (O2) on the end face of a second fibre (F2), wherein between said first and second lenses (O1, O2) there are inserted optical components including a lens (L) which can be translated in a plane perpendicular to the device optical axis which is the straight line traversing the centres of said first and second collimating lenses (O1, O2), characterized in that:
the lens (L) is translatable in and rotatable around two orthogonal directions in said plane.

3. A device as in claim 1 or 2, characterized in that the lens (L) and/or the glass plate (V) are held by supports made of a material easy to bend and twist to obtain the optimal coupling condition.

4. A device as in claim 1 or 2, characterized in that the lens (L) and/or the glass plate (V) are fastened by adhesives.

## Patentansprüche

1. Vorrichtung zum Koppeln optischer Monomode-Fasern über ein kollimiertes Strahlenbündel, bei der die von einer ersten optischen Faser (F1) ausgehende Lichtstrahlung durch eine erste Linse (O1) kollimiert wird und das kollimierte Bündel durch eine zweite Linse (O2) auf die Endfläche einer zweiten Faser (F2) fokussiert wird, wobei zwischen der ersten und der zweiten Linse (O1, O2) optische Bauelemente eingefügt sind, die eine Linse (L) umfassen, die in einer zur optischen Achse der Vorrichtung, welche die die Zentren dieser ersten und zweiten kollimierenden Linsen (O1, O2) durchlaufende gerade Linie ist, senkrechten Ebene verschiebbar ist, dadurch gekennzeichnet, daß
die Linse (L) in zwei orthogonalen Richtungen in dieser Ebene verschiebbar ist; und
diese optischen Bauelemente weiterhin eine Glasplatte (V) mit ebenen und parallelen Oberflächen, die um zwei aufeinander senkrechte Achsen in dieser Ebene verdrehbar ist, umfassen.

2. Vorrichtung zum Koppeln optischer Monomode-Fasern über ein kollimiertes Strahlenbündel, bei der die von einer ersten optischen Faser (F1) ausgehende Lichtstrahlung durch eine erste Linse (O1) kollimiert wird und das kollimierte Bündel durch eine zweite Linse (O2) auf die Endfläche einer zweiten Faser (F2) fokussiert wird, wobei zwischen der ersten und der zweiten Linse (O1, O2) optische Bauelemente eingefügt sind, die eine Linse (L) umfassen, die in einer zur optischen Achse der Vorrichtung, welche die die Zentren dieser ersten und zweiten kollimierenden Linsen (01, 02) durchlaufende gerade Linie ist, senkrechten Ebene verschiebbar ist, dadurch gekennzeichnet, daß
die Linse (L) in zwei orthogonalen Richtungen in dieser Ebene verschiebbar und um diese Richtungen verdrehbar ist.

3. Vorrichtung nach Anspruch 1 oder 2, dadurch gekennzeichnet, daß die Linse (L) und/oder die Glasplatte (V) von Trägern gehalten sind, die aus einem leicht biegbaren und verdrehbaren Material bestehen, um die optimalen Koppelbedingungen zu erhalten.

4. Vorrichtung nach Anspruch 1 oder 2, dadurch gekennzeichnet, daß die Linse (L) und/oder die Glasplatte (V) durch Klebemittel befestigt sind.

## Revendications

1. Dispositif pour coupler des fibres optiques monomodes par l'intermédiaire d'un faisceau collimaté, dans lequel le rayonnement lumineux sortant d'une première fibre optique (F1) est collimaté par une première lentille (O1) et le faisceau collimaté est focalisé à l'aide d'une seconde lentille (O2) sur la face terminale d'une seconde fibre (F2) où entre lesdites première et seconde lentilles (O1,O2) on a placé des composants optiques comprenant une lentille (L) apte à être soumise à une translation dans un plan perpendiculaire à l'axe optique du dispositif, qui est la ligne droite qui traverse les centres desdites première et seconde lentilles de collimation (O1,O2), caractérisé en ce que:
la lentille (L) est apte à être soumise à une translation dans ledit plan selon deux directions orthogonales; et
lesdits composants optiques comprennent en outre une plaquette en verre (V), à faces planes et parallèles et apte à être tournée autour de deux axes perpendiculaires dans ledit plan.

2. Dispositif pour coupler des fibres optiques monomodes par l'intermédiaire d'un faisceau collimaté, dans lequel le rayonnement lumineux sortant d'une première fibre optique (F1) est collimaté par une première lentille (O1) et le faisceau collimaté est focalisé à l'aide d'une seconde lentille (O2) sur la face terminale d'une seconde fibre (F2), où entre lesdites première et seconde lentilles (O1,O2) on a placé des composants optiques comprenant une lentille (L) apte à être soumise à une translation dans un plan perpendiculaire à l'axe optique du dispositif, qui est la ligne droite qui traverse les centres desdites première et seconde lentilles de collimation (O1,O2), caractérisé en ce que:
la lentille (L) est apte à être soumise à une translation et à une rotation autour de deux directions orthogonales dans ledit plan.

3. Dispositif selon les revendications 1 ou 2, caractérisé en ce que la lentille (L) et/ou la plaque en verre (V) sont supportées par des supports fabriqués en un matériau qui peut aisément se plier et se tordre pour obtenir la condition de couplage optimale.

4. Dispositif selon la revendication 1 ou 2, caractérisé en ce que la lentille (L) et/ou la plaque en verre (V) sont bloquées avec des adhésifs.
